# EUROPEAN PATENT APPLICATION

(11) **EP 2 138 035 A1**
(43) Date of publication of application: **30.12.2009**
(21) Application number: 09163855.1
(22) Date of filing: 26.06.2009
(51) Int. Cl.: A01J 25/10, A01J 25/11, A23C 19/05

(54) **Device for draining a liquid from a container intended for producing a food product**

(30) Priority: 27.06.2008 NL 2001730
(71) Applicant: Juurlink, Gerhardus Hermanus Maria, 7705 PD Drogteropslagen (NL)
(72) Inventor: Juurlink, Gerhardus Hermanus Maria, 7705 PD Drogteropslagen (NL)
(74) Representative: Bakker, Hendrik

(57) **Abstract**

The invention relates to a device (1) for draining liquid from a container (2) for producing a food product, which device is provided with a drainage chamber (3) which comprises one or more passage openings (13-1,13-2,13-3,13-4,13-5) for passage of the liquid out of the container to the drainage chamber, and a drainage opening (23) for draining the liquid out of the drainage chamber. The device is also provided with a closing member (4-i) for closing each passage opening (13-i), wherein a cleaning chamber (5) is added to the drainage chamber, which closing member is at least partially movable through the cleaning chamber, this cleaning chamber being provided with an opening (25) for passage of cleaning liquid.

The invention also relates to a container intended for producing a food product, which is provided with a device according to the invention.

The invention relates to a method for draining whey from such a container and to a method for cleaning a device according to the invention.

## Description

The present invention relates to a device for draining liquid from a container, which container is intended for producing a food product.

Such a draining device is known in the field.

The known device is generally difficult to clean. This is a great drawback, particularly in the food industry where high standards of hygiene are required.

The invention has for its object to provide a device of the type stated in the preamble which obviates this drawback.

The device according to the invention is provided according to the invention with a drainage chamber which comprises one or more passage openings for passage of the liquid out of the container to the drainage chamber, and a drainage opening for draining the liquid out of the drainage chamber and a closing member for closing each passage opening, wherein a cleaning chamber is added to the drainage chamber such that the closing member is at least partially movable through the cleaning chamber, this cleaning chamber being provided with an opening for passage of cleaning liquid.

Owing to the inventive insight of adding to the drainage chamber a cleaning chamber in which the closing member is at least partially movable, the respective part of the closing member can be cleaned.

In a first preferred embodiment a cleaning opening for passage of the cleaning liquid is provided between the drainage chamber and the cleaning chamber. In this first preferred embodiment the drainage chamber and the cleaning chamber can be cleaned in one cleaning operation using the same cleaning liquid.

In a further preferred embodiment a further closing member is provided in the cleaning chamber for closing the cleaning opening. By closing the cleaning opening the drainage chamber can be separately cleaned with the part of each closing member present therein.

The invention also relates to a method for cleaning this further preferred embodiment of the device according to the invention, wherein the method comprises the following steps of:
(a) allowing cleaning liquid to flow through the drainage opening into the drainage chamber;
(b) opening the cleaning opening by means of the further closing member, wherein the cleaning liquid flows through the cleaning opening into the cleaning chamber to the opening for passage of the cleaning liquid; and
(c) opening each passage opening in turn by means of the respective closing member, wherein the cleaning liquid flows through the passage opening.

In a practical embodiment the drainage chamber is provided with a plurality of passage openings lying one above another, each with an associated closing member. In this embodiment liquid can be drained from the container at different liquid levels.

A separate drive is preferably provided for each closing member.

In a practical embodiment the closing member is a valve. In a further elaboration of the practical embodiment the valve head is movable in the drainage chamber and the valve stem is movable in the cleaning chamber. Both can be cleaned rapidly and hygienically in effective manner.

The invention further relates to a container intended for producing a food product, which container is provided with a device according to the invention. In a particularly hygienic embodiment the device is integrated into the container.

The invention also relates to a method for draining whey from the container, this container being intended for the production of cheese, wherein the method comprises the following steps of:
(a) determining the liquid level of the whey in the container; and
(b) opening one or more passage openings of the container at the position of the liquid level determined in step (a).

The device according to the invention is particularly suitable for draining whey, which floats on top of curd, in a container intended for producing cheese. It is moreover known in practice that foaming occurs if use is made of milk of a lower quality in the preparation of cheese. The curdled foam floats on the whey and is referred to in the field as floating curd. This floating curd can also be drained in efficient manner using the device according to the invention.

The invention will now be further elucidated with reference to the accompanying figures, in which
Figure 1 shows a cross-sectional view of a container with a device according to the invention in a first preferred embodiment, in the position for draining liquid from the container;
Figures 2 and 3 show the device of figure 1 in the position for cleaning the device.

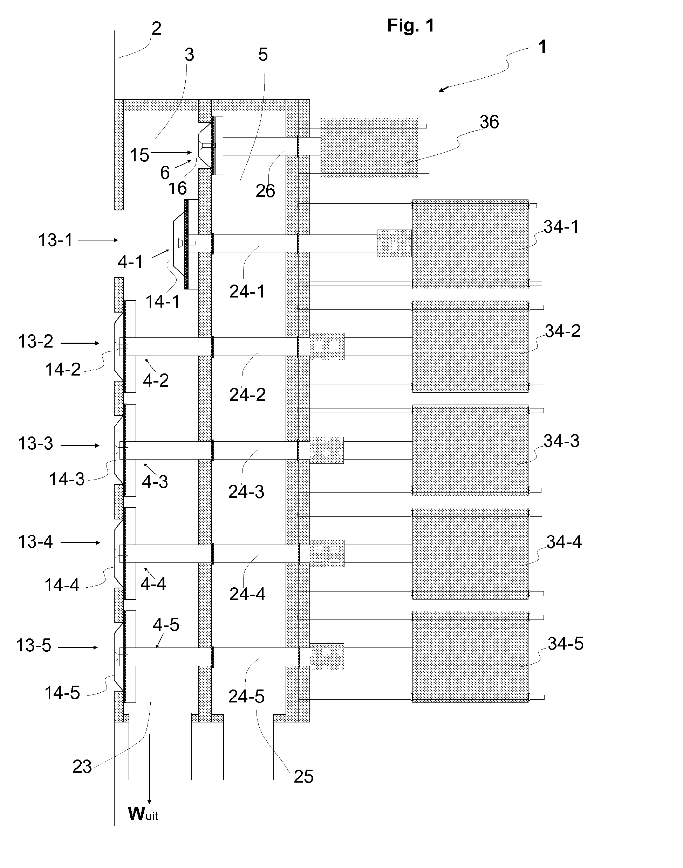

Figure 1 shows a device 1 according to the invention for draining a liquid from a container 2, of which only the wall is shown schematically. Container 2 is generally intended for producing a food product and, in the particular embodiment shown here, for producing cheese. Container 2 is for instance a vat into which a mixture of milk and a curdling agent is introduced, this mixture being agitated and/or cut such that a mixture of curd and whey results. An example of such a vat forms part of a device as described in the European application EP 07107788 of the same applicant. When the mixture of curd and whey rests for a time, the curd will settle and the whey will float to the top.

Device 1 comprises a drainage chamber 3 provided with a number of passage openings 13-1, 13-2, 13-3, 13-4 and 13-5. Passage openings 13-i are intended for passage of the whey. Drainage chamber 3 is provided on the underside with a drainage opening 23 for draining the whey which flows downward through drainage chamber 3 out of container 2 in the direction of arrow Wᵤᵢₜ.

Each passage opening 13-I is provided with an associated closing member 4-i. In the shown preferred embodiment the closing member is a valve provided with a valve head 14-i and a valve stem 24-i. Each closing member 4-i is provided with a drive 34-i. Drive 34-i can for instance take an electric or pneumatic form.

In figure 1 device 1 is shown in a first position, in which the uppermost valve 4-1 is open and the other valves 4-2 to 4-5 are closed. All liquid (in this example whey) at the level lying at the position of passage opening 13-1 will flow away via drainage chamber 3 out of drainage opening 23 until the level drops to below passage opening 13-1. Device 1 can be set to the desired liquid level by providing a plurality of passage openings 13-1 to 13-5.

Following use, device 1 according to the invention can be cleaned in efficient and exceptionally hygienic manner. A cleaning chamber 5 is added to drainage chamber 3. Each closing member 4-i can be moved partially through cleaning chamber 5. In the shown preferred embodiment cleaning chamber 5 lies between drainage chamber 3 and drives 34-i. Cleaning chamber 5 is provided on the underside with an opening 25 intended for passage of cleaning liquid.

Provided between drainage chamber 3 and cleaning chamber 5 is a cleaning opening 15 for passage of the cleaning liquid. In the shown preferred embodiment cleaning opening 15 is situated on the upper side of device 1. Provided in cleaning chamber 5 is a further closing member 6 for closing cleaning opening 15. In the shown preferred embodiment the further closing member is a valve with a valve head 16 and a valve stem 26, and a separate drive 36 which can take a pneumatic or electric form.

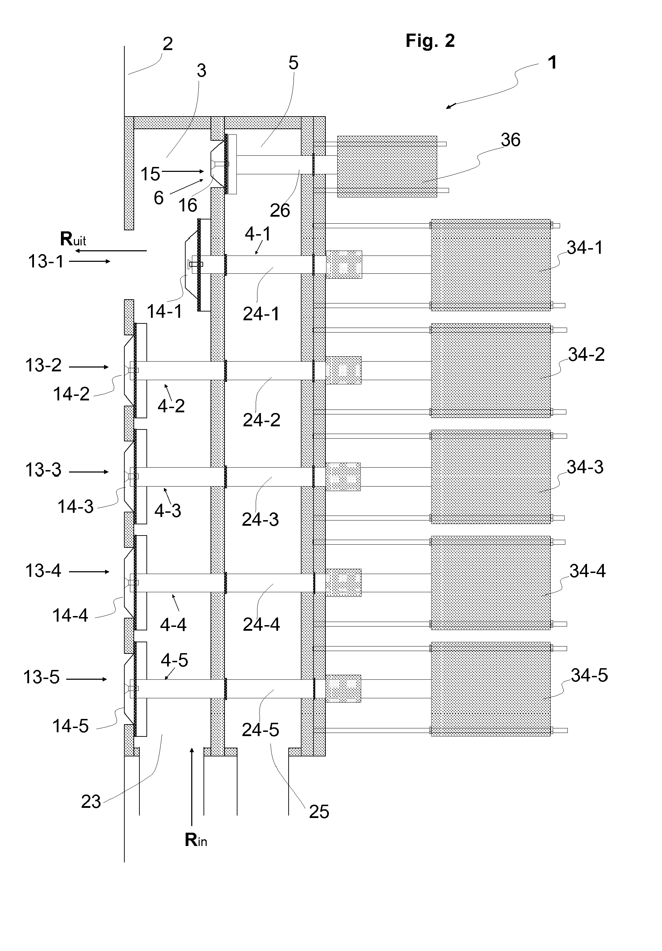

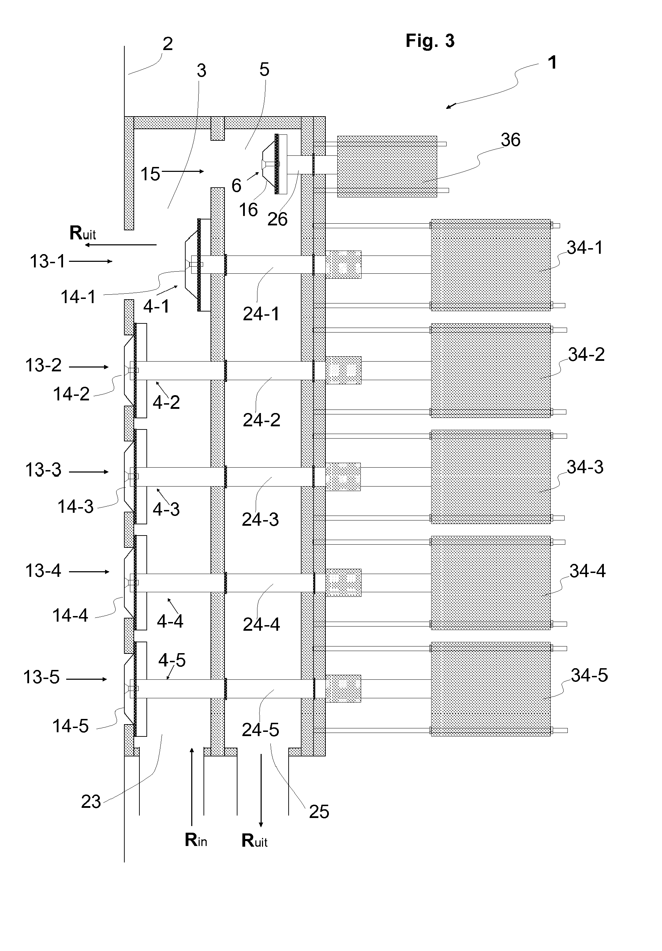

The method steps for the purpose of cleaning are illustrated on the basis of figures 2 and 3. During cleaning, the cleaning liquid is guided in the direction of arrow Rᵢₙ through drainage opening 23 into drainage chamber 3. Diverse suitable cleaning liquids are known in the relevant field which can be utilized as desired. The cleaning liquid is preferably introduced under pressure, for instance injected.

Cleaning opening 15 is also opened by means of the further closing member 6. As a result the cleaning liquid flows through cleaning opening 15 into cleaning chamber 5 to the opening for passage of the cleaning liquid in the direction of arrow Rᵤᵢₜ. The components of closing member 6 are here cleaned by the cleaning liquid as it flows past.

Each passage opening 13-i is then in turn opened by means of the respective closing member 4-i, wherein the cleaning liquid flows through the opened passage opening, and closed.

In the open position of valves 4-i the valve head 14-1 to 14-5 and the foremost part of valve stems 24-1 to 24-5 (to the extent these are present in drainage chamber 3) are cleaned. The portion of valve stems 24-1 to 24-5 situated in figure 2 between drainage chamber 3 and cleaning chamber 5 is also cleaned. Container 2 is also cleaned by the cleaning liquid flowing therein.

In the closed position of valves 4-i the rearmost part of valve stems 24-1 to 24-5 will be cleaned.

When all closing members 4-i have been opened and closed again, the cleaning operation is completed.

The invention is of course not limited to the described and shown preferred embodiment. The number of passage openings (i) can be reduced or increased as required. Drives 34-1 to 34-5 and 36 can be controlled automatically by a control member (not shown). The level of the liquid in container 2 can optionally be measured and compared to a preset threshold value, on the basis of which the control member can be operated. These techniques are known in the relevant field and can be applied, without further elucidation, with the device according to the invention. Device 1 can be arranged separately as well as being integrated into the container.

The invention therefore extends to any embodiment falling within the appended claims, wherein the text and figures serve for purposes of elucidation.

## Claims

1. Device for draining liquid from a container intended for producing a food product, which device is provided with:
(a) a drainage chamber which comprises one or more passage openings for passage of the liquid out of the container to the drainage chamber, and a drainage opening for draining the liquid out of the drainage chamber;
(b) a closing member for closing each passage opening,
(c) wherein a cleaning chamber is added to the drainage chamber such that the closing member is at least partially movable through the cleaning chamber, this cleaning chamber being provided with an opening for passage of cleaning liquid.

2. Device as claimed in claim 1, wherein a cleaning opening for passage of the cleaning liquid is provided between the drainage chamber and the cleaning chamber.

3. Device as claimed in claim 2, wherein a further closing member is provided in the cleaning chamber for closing the cleaning opening.

4. Device as claimed in claim 2 or 3, wherein the drainage chamber is provided with a plurality of passage openings lying one above another, each with an associated closing member.

5. Device as claimed in any of the foregoing claims, wherein a separate drive is provided for each closing member.

6. Device as claimed in any of the foregoing claims, wherein the closing member is a valve.

7. Device as claimed in claim 6, wherein the valve head is movable in the drainage chamber and the valve stem is movable in the cleaning chamber.

8. Container intended for producing a food product, which container is provided with a device as claimed in any of the foregoing claims 1-7.

9. Container as claimed in claim 8, wherein the device as claimed in claims 1-7 is integrated into the container.

10. Method for draining whey from a container as claimed in claim 8 or 9, this container being intended for the production of cheese, wherein the method comprises the following steps of:
(a) determining the liquid level of the whey in the container; and
(b) opening one or more passage openings of the container at the position of the liquid level determined in step (a).

11. Method for cleaning a device as claimed in claim 3, wherein the method comprises the following steps of:
(a) allowing cleaning liquid to flow through the drainage opening into the drainage chamber;
(b) opening the cleaning opening by means of the further closing member, wherein the cleaning liquid flows through the cleaning opening into the cleaning chamber to the opening for passage of the cleaning liquid; and
(c) opening each passage opening in turn by means of the respective closing member, wherein the cleaning liquid flows through the passage opening.
